# EUROPÄISCHE PATENTSCHRIFT

(11) **EP 2 649 703 B1**
(45) Veröffentlichungstag und Bekanntmachung des Hinweises auf die Patenterteilung: **01.11.2017**
(21) Anmeldenummer: 11797223.2
(22) Anmeldetag: 12.12.2011
(51) Int. Cl.: H02K 11/028, B60L 9/00, H02K 11/40

(54) **ELEKTRISCHE MASCHINE, SCHIENENFAHRZEUG UND SCHIENENGEBUNDENE WAGENGARNITUR**
ELECTRIC MACHINE, RAIL VEHICLE AND RAIL-BOUND CAR FITTINGS
MOTEUR ÉLECTRIQUE, VÉHICULE FERROVIAIRE ET RAME DE VOITURES SUR RAILS

(30) Priorität: 23.12.2010 DE 102010064016
(43) Veröffentlichungstag der Anmeldung: 16.10.2013
(73) Patentinhaber: Siemens Aktiengesellschaft, 80333 München (DE)
(72) Erfinder: BRAUER, Michael, 91096 Möhrendorf (DE); PROBOL, Carsten, 91054 Buckenhof (DE)
(86) Internationale Anmeldenummer: PCT/EP2011/072465
(87) Internationale Veröffentlichungsnummer: WO 2012/084576

(56) Entgegenhaltungen:
- EP-A1- 1 280 249
- EP-A2- 0 391 181
- DE-A1- 3 511 755

## Beschreibung

Die vorliegende Erfindung betrifft eine elektrische Maschine,
- wobei die elektrische Maschine einen Grundkörper aufweist, in dem ein Stator der elektrischen Maschine angeordnet ist,
- wobei die elektrische Maschine eine Rotorwelle aufweist, die über Lager drehbar im Grundkörper gelagert ist,
- wobei die elektrische Maschine ein Abgreifelement aufweist, das mit dem Grundkörper mechanisch drehfest verbunden ist und das eine in der Rotorwelle auftretende Spannung abgreift,
- wobei das Abgreifelement über einen ohmschen Widerstand mit dem Grundkörper elektrisch verbunden ist.

Die vorliegende Erfindung betrifft weiterhin ein Schienenfahrzeug,
- wobei das Schienenfahrzeug mindestens eine Radwelle und mindestens eine elektrische Maschine aufweist,
- wobei die mindestens eine Radwelle mit einer Rotorwelle der mindestens einen elektrischen Maschine direkt oder über ein Getriebe verbunden ist.

Die vorliegende Erfindung betrifft weiterhin eine schienengebundene Wagengarnitur, die eine Folge von miteinander gekoppelten Schienenfahrzeugen aufweist.

Aus der EP 0 391 181 A2 ist eine dynamoelektrische Maschine bekannt, die einen Stator und einen Rotor aufweist. Der Rotor ist auf einer Rotorwelle angeordnet, die über auf Fundamenten angeordnete Lager relativ zum Stator drehbar gelagert ist. In der Nähe eines der Lager ist eine Parallelschaltung eines Widerstands und einer Kapazität angeordnet. Der Widerstand weist einen Widerstandswert größer als 100 Ω auf. Die Kapazität weist einen Kapazitätswert von 1 *µ*F oder mehr auf. Zwischen der Parallelschaltung von Widerstand und Kapazität und Erde ist weiterhin ein Shuntwiderstand angeordnet. Über die Dimensionierung des Shuntwiderstandes finden sich in der EP 0 391 181 A2 keine Aussagen. In der Nähe des anderen Lagers wird eine Wellenspannung direkt auf die Erde abgeleitet.

Der EP 1 280 249 A1 ist ein ähnlicher Offenbarungsgehalt zu entnehmen.

In Elektromotoren können in der Rotorwelle Wellenspannungen auftreten, welche Lagerströme hervorrufen. Die Lagerströme sind grundsätzlich unerwünscht, aber nicht in jedem Fall wirklich störend. Die gravierendste Art von Lagerströmen sind die so genannten EDM-Lagerströme (EDM = electric discharge machining), weil diese Art von Lagerströmen sehr schnell zu Lagerschäden führt. Bei dieser Art von Lagerströmen entsteht ein Lichtbogen zwischen den Rollen und der Laufbahn der Lager. Als Folge davon verbrennt das Schmierfett, und es entstehen Krater in den Lagerschalen.

Zusätzlich zu EDM-Lagerströmen können auch kapazitive Lagerströme, klassische Wellenspannungen, hochfrequente Zirkularströme und kapazitive Rotorerdströme auftreten.

Zur Beseitigung und Unterdrückung von Lagerströmen ist im Stand der Technik bekannt, die elektrische Maschine mit einem Abgreifelement zu versehen, das mit dem Grundkörper mechanisch drehfest verbunden ist und das eine in der Rotorwelle auftretende Spannung abgreift. Der eingangs genannte Stand der Technik zeigt derartige Ausgestaltungen.

Insbesondere bei Schienenfahrzeugen ist diese Vorgehensweise jedoch problematisch. Der Grund hierfür besteht darin, dass durch das Abgreifelement eine elektrisch leitfähige Verbindung von der Schiene über die Radachse und ggf. ein Getriebe zum Motorgehäuse besteht. Die Verbindung kann sehr niederohmig sein. In der Folge kann es geschehen, dass ein Betriebsstrom, der von einem anderen Schienenfahrzeug (insbesondere einem Schienenfahrzeug eines anderen Zuges) als Rückstrom in die Schiene eingespeist wird, in erheblichem Umfang durch das Schienenfahrzeug fließt. Dadurch können die Kommunikationseinrichtungen auf dem Schienenfahrzeug gestört werden bzw. das Fahrzeugerdungssystem, insbesondere der Schirm von Datenleitungen, überlastet werden. Speziell bei langen Fahrzeugen mit Aluminiumwagenkasten ist diese Gefahr vorhanden, da das Fahrzeug im Ergebnis einen so großen leitenden Querschnitt zur Verfügung stellt, dass der spezifische Widerstand pro Meter Wagenlänge kleiner ist als der spezifische Widerstand pro Meter Schiene. Aus diesem Grund werden Abgreifeinrichtungen der oben genannten Art bei Schienenfahrzeugen meist nicht verwendet.

Die Aufgabe der vorliegenden Erfindung besteht darin, eine elektrische Maschine, ein Schienenfahrzeug und eine schienengebundene Wagengarnitur zu schaffen, bei der sowohl Lagerströme als auch Traktionsrückströme vermieden oder zumindest in erheblichem Umfang reduziert werden.

Die Aufgabe wird durch eine elektrische Maschine mit den Merkmalen des Anspruchs 1 gelöst. Vorteilhafte Ausgestaltungen der erfindungsgemäßen elektrischen Maschine sind Gegenstand der abhängigen Ansprüche 2 bis 5.

Erfindungsgemäß ist vorgesehen, eine elektrische Maschine der eingangs genannten Art dadurch auszugestalten, dass der ohmsche Widerstand als Kaltleiter ausgebildet ist und dass ein Widerstandswert des ohmschen Widerstands zwischen 10 mΩ und 10 Ω liegt. Der Widerstandswert kann beispielsweise zwischen 20 mΩ und 1 Ω liegen, insbesondere zwischen 50 mΩ und 100 mΩ.

Vorzugsweise ist dem ohmschen Widerstand eine Kapazität parallel geschaltet. Ein Kapazitätswert der Kapazität kann mindestens 1 nF betragen. Vorzugsweise beträgt der Kapazitätswert sogar mindestens 5 nF, insbesondere mindestens 10 nF.

Die oben stehend genannten Kapazitäts- und Widerstandswerte sind auf Normalbedingungen bezogen, also eine Temperatur von 20 °C und normalen Luftdruck (1013 Hektopascal). Durch die Ausbildung des ohmschen Widerstands als Kaltleiter wird insbesondere erreicht, dass bei hohen Strömen, welche den Widerstand erwärmen, dessen Widerstand ansteigt, so dass er einem weiteren Stromfluss einen größeren Widerstand entgegensetzt.

Die Aufgabe wird weiterhin durch ein Schienenfahrzeug mit den Merkmalen des Anspruchs 6 gelöst.

Erfindungsgemäß ist vorgesehen, dass bei einem Schienenfahrzeug der eingangs genannten Art mindestens eine elektrische Maschine erfindungsgemäß ausgebildet ist.

Die Aufgabe wird weiterhin durch eine schienengebundene Wagengarnitur mit den Merkmalen des Anspruchs 7 gelöst.

Erfindungsgemäß ist vorgesehen, dass zumindest das erste und/oder das letzte Schienenfahrzeug der Folge von miteinander gekuppelten Schienenfahrzeugen erfindungsgemäß ausgebildet sind.

Weitere Vorteile und Einzelheiten ergeben sich aus der nachfolgenden Beschreibung von Ausführungsbeispielen in Verbindung mit den Zeichnungen. Es zeigen in Prinzipdarstellung:
- FIG 1: schematisch eine elektrische Maschine,
- FIG 2: schematisch ein Detail von FIG 1 in schaltungstechnischer Hinsicht,
- FIG 3: schematisch ein Detail von FIG 1 in konstruktivmechanischer Hinsicht,
- FIG 4: schematisch ein Schienenfahrzeug,
- FIG 5: schematisch einen Teil des Schienenfahrzeugs von FIG 4 und
- FIG 6: schematisch eine schienengebundene Wagengarnitur.

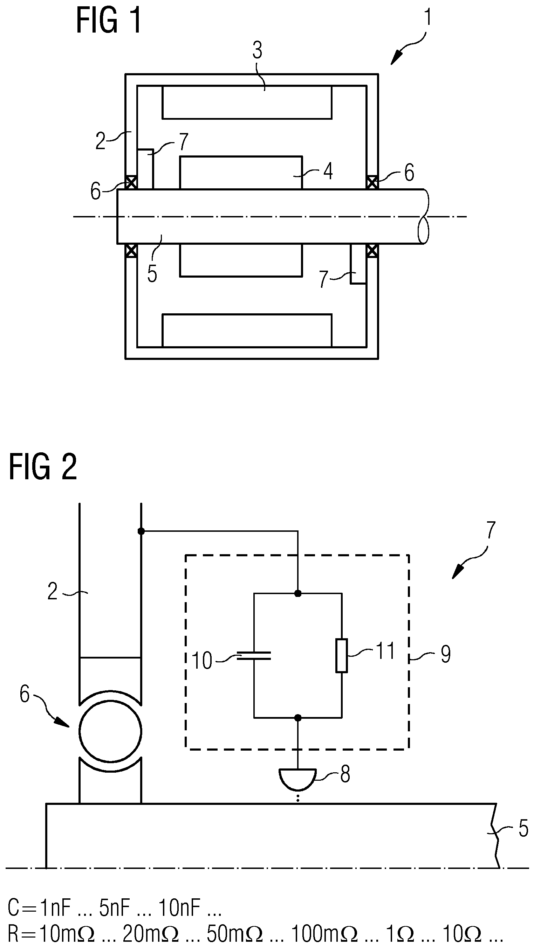

Gemäß FIG 1 weist eine elektrische Maschine 1 einen Grundkörper 2 auf. Im Grundkörper 2 ist ein Stator 3 der elektrischen Maschine 1 angeordnet. Die elektrische Maschine 1 weist weiterhin einen Rotor 4 auf. Der Rotor 4 wirkt im Betrieb der elektrischen Maschine 1 mit dem Stator 3 elektrisch zusammen. Der Rotor 4 ist auf einer Rotorwelle 5 der elektrischen Maschine 1 angeordnet, die über Lager 6 drehbar im Grundkörper 2 angeordnet ist.

Im Betrieb der elektrischen Maschine 1 können in der Rotorwelle 5 Wellenspannungen auftreten. Ohne weitergehende Maßnahmen würden die Wellenspannungen Ströme bewirken, die über die Lager 6 der elektrischen Maschine 1 fließen. Derartige Lagerströme können relativ schnell zu Lagerschäden führen. Um derartige Ströme zu vermeiden oder zumindest zu reduzieren, weist die elektrische Maschine 1 daher (mindestens) eine Schutzschaltung 7 auf, die nachfolgend in Verbindung mit FIG 2 näher erläutert wird. Die Schutzschaltung 7 und mit ihr die nachstehend erläuterten Elemente der Schutzschaltung 7 sind mit dem Grundkörper 2 mechanisch drehfest verbunden.

Gemäß FIG 2 weist die Schutzschaltung 7 ein Abgreifelement 8 auf. Das Abgreifelement 8 greift die in der Rotorwelle 5 auftretenden Spannungen ab. Ausgehend vom Abgreifelement 8 fließt somit ein Strom auf den Grundkörper 2. Das Abgreifelement 8 ist, bezogen auf den Stromfluss, dasjenige Element, das unmittelbar die in der Rotorwelle 5 (oder einem drehfest auf der Rotorwelle 5 angeordneten Zwischenelement, beispielsweise einem Schleifring) anstehende Spannung abgreift. Das Abgreifelement 8 ist also, bezogen auf den Stromfluss von der Rotorwelle 5 zum Grundkörper 2, das "frontnäheste" Element der Schutzschaltung 7.

Gemäß FIG 2 ist das Abgreifelement 8 elektrisch nicht direkt mit dem Grundkörper 2 verbunden, sondern über eine Impedanz 9. Die Impedanz 9 weist gemäß FIG 2 eine Kapazität 10 und einen ohmschen Widerstand 11 auf, wobei die Kapazität 10 und der ohmsche Widerstand 11 einander parallel geschaltet sind. Ein Kapazitätswert C der Kapazität 10 sollte mindestens 1 nF betragen. Vorzugsweise beträgt der Kapazitätswert C sogar mindestens 5 nF, insbesondere mindestens 10 nF.

Ein Widerstandswert R des ohmschen Widerstands 11 sollte zwischen 10 mΩ und 10 Ω liegen. Vorzugsweise liegt der Widerstandswert R zwischen 20 mΩ und 1 Ω. Insbesondere kann er zwischen 50 mΩ und 100 mΩ liegen.

Die genannten Aussagen über den Kapazitätswert C und den Widerstandswert R beziehen sich auf Normalbedingungen (20 °C, normaler Luftdruck).

Erfindungsgemäß ist der ohmsche Widerstand 11 als PTC-Widerstand ausgebildet, also als Kaltleiter.

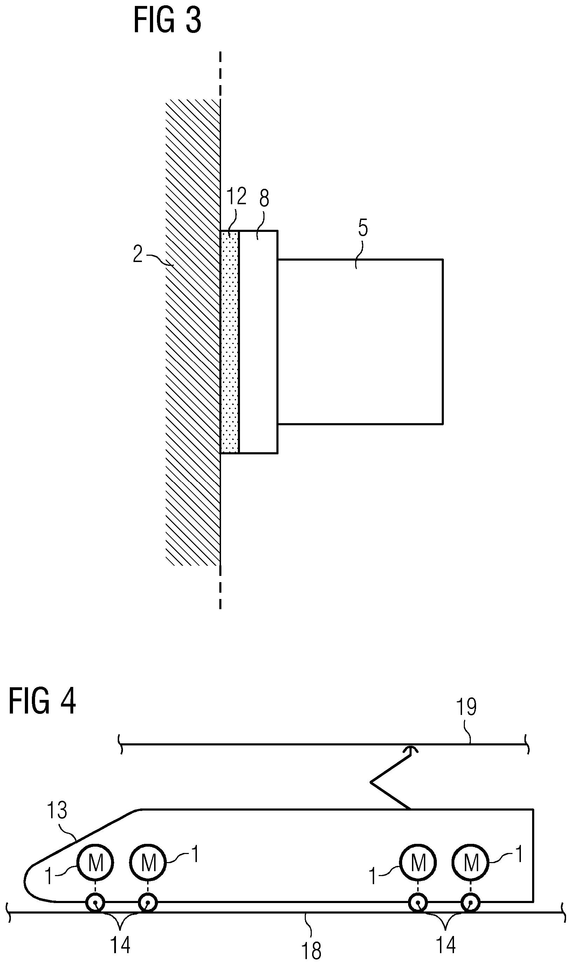

Zur Realisierung der oben genannten Kapazitäts- und Widerstandswerte C, R kann beispielsweise gemäß FIG 3 als Abgreifelement 8 ein so genannter SGR (= shaft grounding ring) verwendet werden, wie er beispielsweise aus der US 7 193 836 B2 bekannt ist. Der shaft grounding ring wird im Stand der Technik beispielsweise mittels eines elektrisch gut leitfähigen Epoxidharzes am Grundkörper 2 befestigt. Im Gegensatz hierzu kann bei der vorliegenden Erfindung beispielsweise gemäß FIG 3 das Befestigen mittels eines geeigneten Klebstoffs 12 erfolgen, der alternativ nur eine beschränkte elektrische Leitfähigkeit aufweist oder elektrisch isolierend wirkt. Elektrisch isolierende Klebstoffe sind allgemein bekannt.

Das Einstellen der elektrischen Leitfähigkeit und der Dielektrizitätskonstante des Klebstoffs 12 kann ggf. durch eine gezielte Dosierung der Konzentration an leitfähigen Partikeln im Klebstoff 12 erfolgen. Eine elektrische Isolierung kann beispielsweise auch dadurch erreicht werden, dass zwischen dem shaft grounding ring und dem Grundkörper 2 ein elektrisch isolierendes Element angeordnet wird, beispielsweise eine entsprechende Folie. Auch kann der shaft grounding ring im Kontaktbereich zum Grundkörper 2 elektrisch isolierend beschichtet sein, beispielsweise eloxiert sein. Auch andere Ausgestaltungen sind möglich.

Im Falle der Verwendung eines elektrisch beschränkt leitfähigen Klebstoffs 12 werden die Kapazität 10 und der ohmsche Widerstand als verteilte Elemente realisiert. Alternativ können diskrete Bauelemente, insbesondere in SMD-Technologie (SMD = surface mounted device) verwendet werden.

Aufgrund der erfindungsgemäßen Ausgestaltung der elektrischen Maschine 1 wird erreicht, dass transiente Wellenspannungen, die im Betrieb der elektrischen Maschine 1 auftreten, schnell abgebaut werden. Die Impedanz 9 zwischen dem Abgreifelement 8 und dem Grundkörper 2 ist hierfür unschädlich.

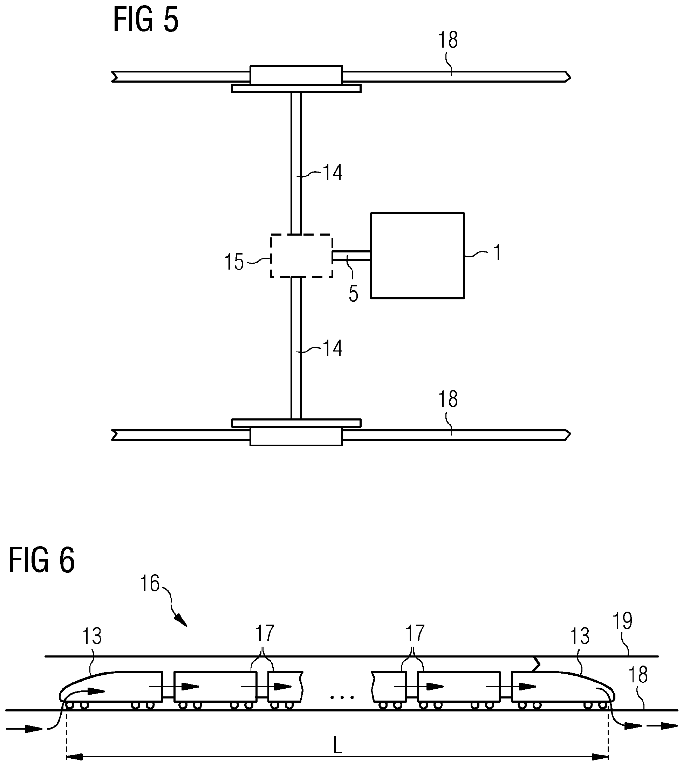

Die erfindungsgemäße elektrische Maschine 1 - also einschließlich der oben stehend beschriebenen Schutzschaltung 7 - kann beispielsweise gemäß den FIG 4 und 5 als Antriebsmotor M (oder ggf. als einer von mehreren Antriebsmotoren M) eines Schienenfahrzeugs 13 verwendet werden. Das Schienenfahrzeug 13 weist in diesem Fall gemäß den FIG 4 und 5 zusätzlich zur elektrischen Maschine 1 eine Radwelle 14 auf. Es kann sich bei der Radwelle 14 um eine Einzelradwelle handeln. Oftmals handelt es sich jedoch um eine Radsatzwelle 14.

Im Falle des Einsatzes bei einem Schienenfahrzeug 13 ist die Radwelle 14 mit der Rotorwelle 5 der erfindungsgemäßen elektrischen Maschine 1 verbunden. Es ist möglich, dass die Verbindung direkt erfolgt. Alternativ kann eine indirekte Verbindung über ein zwischengeschaltetes Getriebe 15 bestehen. Da das Getriebe 15 folglich nur optional vorhanden ist, ist es in FIG 5 nur gestrichelt eingezeichnet.

Das Schienenfahrzeug 13 kann gemäß FIG 6 Bestandteil einer schienengebundenen Wagengarnitur 16 sein. Die schienengebundene Wagengarnitur 16 weist gemäß FIG 6 eine Folge von miteinander gekuppelten Schienenfahrzeugen 13, 17 auf. Erfindungsgemäß sind zumindest das erste und das letzte Schienenfahrzeug der Folge von miteinander gekuppelten Schienenfahrzeugen 13, 17 erfindungsgemäß ausgebildet.

Bei Eisenbahnsystemen erfolgt oftmals über die Schienen 18 der Rückfluss des aus der Oberleitung 19 gezogenen Betriebsstroms. Der Betriebsstrom kann erhebliche Werte erreichen, die teilweise 1000 Ampere übersteigen. Der spezifische Widerstand der Schienen 18 liegt typisch im Bereich von ca. 30 µΩ pro Meter Schiene 18. Bei einer Gesamtlänge L der schienengebundenen Wagengarnitur 16 von ca. 300 Meter - einem realistischen Wert - beträgt der entlang der Schienen 18 auftretende Gesamtwiderstand über die Gesamtlänge rund 9 mΩ. Wenn das erste und das letzte Schienenfahrzeug 13 der schienengebundenen Wagengarnitur 16 zwar eine Abgreifeinrichtung 8 aufweisen würden, die Abgreifeinrichtung 8 aber ohne Zwischenschaltung der Impedanz 9 direkt an den Grundkörper 2 angebunden wäre, läge ein typischer Widerstandswert der schienengebundenen Wagengarnitur 16, gemessen vom ersten zum letzten Schienenfahrzeug 13 der schienengebundenen Wagengarnitur 16 (genauer: von der ersten Radwelle 14 des ersten Schienenfahrzeugs 13 zur letzten Radwelle 14 des letzten Schienenfahrzeugs), typisch im Bereich unter 10 mΩ, beispielsweise bei rund 5 mΩ. In diesem Fall würde daher, wie in FIG 6 durch entsprechende Pfeile angedeutet, ein erheblicher Teil des Betriebsrückstroms durch die schienengebundene Wagengarnitur 16 fließen. Wenn hingegen das erste und das letzte Schienenfahrzeug 13 der schienengebundenen Wagengarnitur 16 erfindungsgemäß ausgestaltet sind, fließt durch die schienengebundene Wagengarnitur 16 nur noch ein geringer Teil des Betriebsrückstromes, beispielsweise weniger als 10 % des Betriebsrückstromes. Wenn eine ausschließlich kapazitive Verbindung besteht (der ohmsche Widerstand 11 also entfällt bzw. hinreichend groß wird), fließt nahezu kein Anteil des Betriebsrückstroms durch die schienengebundene Wagengarnitur 16. Dennoch werden die motorinternen Wellenspannungen schnell und zuverlässig abgebaut.

Die obige Beschreibung dient ausschließlich der Erläuterung der vorliegenden Erfindung. Der Schutzumfang der vorliegenden Erfindung soll hingegen ausschließlich durch die beigefügten Ansprüche bestimmt sein.

## Patentansprüche

1. Elektrische Maschine,
- wobei die elektrische Maschine einen Grundkörper (2) aufweist, in dem ein Stator (3) der elektrischen Maschine angeordnet ist,
- wobei die elektrische Maschine eine Rotorwelle (5) aufweist, die über Lager (6) drehbar im Grundkörper (2) gelagert ist,
- wobei die elektrische Maschine ein Abgreifelement (8) aufweist, das mit dem Grundkörper (2) mechanisch drehfest verbunden ist und das eine in der Rotorwelle (5) auftretende Spannung abgreift,
- wobei das Abgreifelement (8) über einen ohmschen Widerstand (11) mit dem Grundkörper (2) elektrisch verbunden ist,
**dadurch gekennzeichnet, dass** der ohmsche Widerstand (11) als Kaltleiter ausgebildet ist und dass ein Widerstandswert (R) des ohmschen Widerstands (11) zwischen 10 mΩ und 10 Ω liegt.

2. Elektrische Maschine nach Anspruch 1, **dadurch gekennzeichnet, dass** der Widerstandswert (R) zwischen 20 mΩ und 1 Ω liegt, insbesondere zwischen 50 mΩ und 100 mΩ.

3. Elektrische Maschine nach Anspruch 1 oder 2, **dadurch gekennzeichnet, dass** dem ohmschen Widerstand (11) eine Kapazität (10) parallel geschaltet ist.

4. Elektrische Maschine nach Anspruch 3, **dadurch gekennzeichnet, dass** ein Kapazitätswert (C) der Kapazität (10) mindestens 1 nF beträgt.

5. Elektrische Maschine nach Anspruch 4, **dadurch gekennzeichnet, dass** der Kapazitätswert (C) mindestens 5 nF beträgt, insbesondere mindestens 10 nF.

6. Schienenfahrzeug,
- wobei das Schienenfahrzeug mindestens eine Radwelle (14) und mindestens eine elektrische Maschine (1) aufweist,
- wobei die mindestens eine Radwelle (14) mit einer Rotorwelle (5) der mindestens einen elektrischen Maschine (1) direkt oder über ein Getriebe (15) verbunden ist,
- wobei die mindestens eine elektrische Maschine (1) nach einem der obigen Ansprüche ausgebildet ist.

7. Schienengebundene Wagengarnitur,
- wobei die schienengebundene Wagengarnitur eine Folge von miteinander gekuppelten Schienenfahrzeugen (13,17) aufweist,
- wobei zumindest das erste und/oder das letzte Schienenfahrzeug (13) der Folge von miteinander gekuppelten Schienenfahrzeugen (13,17) nach Anspruch 6 ausgebildet sind.

## Claims

1. Electric machine,
- wherein the electric machine has a base body (2) in which a stator (3) of the electric machine is arranged,
- wherein the electric machine has a rotor shaft (5) which is rotatably mounted in the base body (2) by way of bearings (6),
- wherein the electric machine has a tapping element (8) which is connected to the base body (2) in a mechanically rotationally fixed manner and which taps a voltage occurring in the rotor shaft (5),
- wherein the tapping element (8) is electrically connected to the base body (2) by way of an ohmic resistor (11),
**characterised in that** the ohmic resistor (11) is embodied as a PTC thermistor and a resistance value (R) of the ohmic resistor (11) lies between 10 mΩ and 10 Ω.

2. Electric machine according to claim 1, **characterised in that** the resistance value (R) lies between 20 mΩ and 1 Ω, in particular between 50 mΩ and 100 mΩ.

3. Electric machine according to claim 1 or 2, **characterised in that** a capacitor (10) is connected in parallel with the ohmic resistor (11).

4. Electric machine according to claim 3, **characterised in that** a capacitance value (C) of the capacitor (10) equals at least 1 nF.

5. Electric machine according to claim 4, **characterised in that** the capacitance value (C) equals at least 5 nF, in particular at least 10 nF.

6. Rail vehicle,
- wherein the rail vehicle has at least one wheel axle (14) and at least one electric machine (1),
- wherein the at least one wheel axle (14) is connected to a rotor shaft (5) of the at least one electric machine (1) directly or by way of a gear train assembly (15),
- wherein the at least one electric machine (1) is embodied according to one of the above claims.

7. Rail-mounted car set,
- wherein the rail-mounted car set has a sequence of rail vehicles (13, 17) coupled to one another,
- wherein at least the first and/or the last rail vehicle (13) of the sequence of rail vehicles (13, 17) coupled to one another are embodied according to claim 6.

## Revendications

1. Machine électrique,
- dans laquelle la machine électrique a un corps (2) de base dans lequel est monté un stator (3) de la machine électrique,
- dans laquelle la machine électrique a un arbre (5) de rotor, qui est monté tournant dans le corps (2) de base par des paliers (6),
- dans laquelle la machine électrique a un élément (8) de prise, qui est solidaire en rotation mécaniquement du corps (2) de base et qui prélève une tension apparaissant dans l'arbre (5) du rotor,
- dans laquelle l'élément (8) de prise est relié électriquement au corps (2) de base par une résistance (11) ohmique,
**caractérisée en ce que** la résistance (11) ohmique est constituée sous la forme d'une thermistance et **en ce qu'**une valeur (R) de la résistance (11) ohmique est comprise entre 10 mΩ et 10 Ω.

2. Machine électrique suivant la revendication 1, **caractérisée en ce que** la valeur (R) de la résistance est comprise entre 20 mΩ et 1 Ω, notamment entre 50 mΩ et 100 mΩ.

3. Machine électrique suivant la revendication 1 ou 2, **caractérisée en ce qu'**une capacité (10) est montée en parallèle à la résistance (11) ohmique.

4. Machine électrique suivant la revendication 3, **caractérisée en ce qu'**une valeur (C) de la capacité (10) est d'au moins 1 Nf.

5. Machine électrique suivant la revendication 4, **caractérisée en ce que** la valeur (C) de la capacité est d'au moins 5 nF, notamment d'au moins 10 nF.

6. Véhicule ferroviaire
- dans lequel le véhicule ferroviaire a au moins un essieu (14) et au moins une machine (1) électrique,
- dans lequel le au moins un essieu (14) est relié à un arbre (5) du rotor de la au moins une machine (1) électrique directement ou par une transmission (15),
- dans lequel la au moins une machine (1) électrique est constituée suivant l'une des revendications précédentes.

7. Rame de voitures sur rails
- dans laquelle la rame de voitures sur rails a une succession de véhicules (13, 17) ferroviaires attelés les uns aux autres,
- dans laquelle au moins le premier et/ou le dernier véhicule (13) ferroviaire de la succession de véhicules (13, 17) ferroviaires attelés les uns aux autres sont constitués suivant la revendication (6).
